# EUROPEAN PATENT APPLICATION

(11) **EP 4 345 492 A1**
(43) Date of publication of application: **03.04.2024**
(21) Application number: 22199181.3
(22) Date of filing: 30.09.2022
(51) Int. Cl.: G01S 7/28, G01S 7/40, G01S 13/88

(54) **A RADAR DEVICE AND A METHOD FOR CALIBRATING THE RADAR DEVICE**

(71) Applicant: Acconeer AB, 211 77 Malmö (SE)
(72) Inventor: Wasting, Magnus, 22480 LUND (SE); Axholt, Andreas, 22474 LUND (SE)
(74) Representative: Lind Edlund Kenamets Intellectual Property AB

(57) **Abstract**

A method for calibrating a radar device (100) comprising: a power amplifier (114), a radar pulse generator (108) configured to, responsive to a pulse trigger signal, provide a radar pulse to a signal input (114a) of the power amplifier, a supply modulator (110) configured to, responsive to a supply trigger signal, provide a supply pulse to a supply input (114b) of the power amplifier, a first trigger circuit (104) configured to, based on a first clock signal derived from a clock source (102), provide the pulse trigger signal to the radar pulse generator, and the supply trigger signal to the supply modulator, and a first delay circuit (106) having a plurality of delay settings such that a delay value of the first delay circuit is adjustable in a plurality of delay steps, wherein a relative timing of the pulse trigger signal and the supply trigger signal is adjustable using the first delay circuit.

The method comprises determining, based on an acquired radar pulse envelope and supply pulse signal, a calibrated delay setting of the first delay circuit providing a target timing relationship between a radar pulse and a modulated supply voltage. The radar pulse envelope and supply pulse signal are each acquired using sub-sampling.

## Description

### Technical field

The present disclosure relates to a radar device and a method for calibrating a radar device.

### Background

There is a growing interest in radar technology enabling short range and high precision measurements in industrial, medical, security as well as consumer applications. Non-limiting example applications include ranging and positioning, presence and gesture detection, and investigation of material properties such as thickness, size, dielectric properties, material composition etc.

In pulse-based radar systems the send time may be kept short, which in turn enables a lower power consumption. Ultra-wideband, UWB, pulses (e.g. a few GHz or more) may as an example allow pulse durations on the order of nanoseconds, hundreds of picoseconds or shorter. In a pulse-based radar system a radar pulse is transmitted to be reflected off a radar target, wherein the reflected radar pulse is received and analyzed, e.g. to determine a time-of-flight of the radar pulse, and/or other characteristics of the reflected pulse such as amplitude and phase. Pulse-based radar systems operating in the millimetre band, or mmWave band, (herein considered to correspond to the spectrum extending from 30 GHz to 300 GHz) are of particular interest as the short wavelength of mmWave radar pulses facilitates high accuracy measurements in short range applications.

A transmitter of a pulse-based radar system may comprise a power amplifier to amplify the radar pulses before transmission. For power efficiency, a supply modulator may be used to modulate the supply voltage to the power amplifier so that the power consumption may be minimized at times of no transmission. As may be appreciated, the modulation of the supply voltage may further add amplitude modulation to the radar pulses.

One requisite for an effective supply modulation is that the modulated supply voltage aligns or synchronizes with the radar pulse in the power amplifier. A system implementing supply modulation may hence require calibration to setup the system so as to achieve alignment. A well-known issue in relation to supply modulation is that PVT variations (i.e. variations in process conditions, or variations in power supply voltage or temperature) may introduce uncertainties and variations in the relative propagation delays along the supply voltage and signal paths. One calibration approach may comprise measuring the transmitted signal using a receiver after propagation through a propagation channel outside the radar device and configure the system based on the measured signal, e.g. to obtain a desired spectrum of the received signal. Calibrating the system using a receiver may however add unknown signal components as the signal propagates thru an unknown path outside the circuit. Multipath components may distort the signal and alter the measured signal and its spectrum. The receiver further needs enough bandwidth to be able to measure the signal within the complete spectrum of interest.

An alternative approach avoiding propagation through an unknown channel is on-chip measurements. For example, the radar pulse output by the power amplifier may be measured via an auxiliary receiver path provided on-chip, or the radar pulse and the modulated supply voltage may be measured before the power amplifier. However, also in these approaches the bandwidth requirement will still be an issue.

The bandwidth issue increasingly becomes a concern in UWB mmWave systems. Although wideband analog-to-digital converters (ADCs) exist, they may not be feasible to implement in compact and power-efficient devices.

### Summary

In view of the above, it is an object of the present inventive concept to provide a pulsed radar device implementing supply modulation and a method for calibrating such a radar device facilitating on-chip calibration measurements with reduced bandwidth requirements. Further and alternative objectives may be understood from the following.

According to a first aspect of the present inventive concept, there is provided a method for calibrating a radar device. The radar device comprises:
a power amplifier comprising a signal input and a supply input,
a radar pulse generator configured to, responsive to a pulse trigger signal, provide a radar pulse to the signal input of the power amplifier,
a supply modulator configured to, responsive to a supply trigger signal, provide a supply pulse to the supply input of the power amplifier,
a first trigger circuit configured to, based on a first clock signal derived from a clock source, provide the pulse trigger signal to the radar pulse generator, and the supply trigger signal to the supply modulator, and
a first delay circuit having a plurality of delay settings such that a delay value of the first delay circuit is adjustable in a plurality of delay steps, wherein a relative timing of the pulse trigger signal and the supply trigger signal is adjustable using the first delay circuit.

The method comprises:
with a first delay setting of the first delay circuit, acquiring a first radar pulse envelope by: repeatedly providing a pulse trigger signal to trigger the radar pulse generator to provide a plurality of radar pulses, and sub-sampling an envelope signal of the radar pulses such that the envelope signal of each radar pulse is sampled once at a different instantaneous phase; and
with the first or a different delay setting of the first delay circuit, acquiring a first supply pulse signal by: repeatedly providing a supply trigger signal to trigger the supply modulator to provide a plurality of supply pulses, and sub-sampling the supply pulses such that each supply pulse is sampled once at a different instantaneous phase; and
determining, based on the acquired first radar pulse envelope and the first supply pulse signal, a calibrated delay setting of the first delay circuit providing a target timing relationship between a radar pulse and a modulated supply voltage when the first delay circuit is set to the calibrated delay setting.

According to a second aspect, there is provided a radar device comprising:
a power amplifier comprising a signal input and a supply input,
a radar pulse generator configured to, responsive to a pulse trigger signal, provide a radar pulse to the signal input of the power amplifier,
a supply modulator configured to, responsive to a supply trigger signal, provide a supply pulse to the supply input of the power amplifier,
a clock source;
a first trigger circuit configured to, based on a first clock signal derived from the clock source, provide the pulse trigger signal to the radar pulse generator, and the supply trigger signal to the supply modulator; and
a first delay circuit having a plurality of delay settings such that a delay value of the first delay circuit is adjustable in a plurality of delay steps, wherein the radar device is configured to adjust a relative timing of the pulse trigger signal and the supply trigger signal using the first delay circuit.

The radar device further comprises a calibration controller configured to cause the radar device to perform a calibration method in accordance with the first aspect.

The following discussion of embodiments, examples, and advantages applies equally to the method of the first aspect and the radar device of the second aspect.

The first and second aspects of the present inventive concept enables a radar device with a pulsed and supply modulated operation. The power amplifier (PA), the radar pulse generator, the supply modulator, the first trigger circuit and the first delay circuit may for example be comprised in a transmitter of the radar device.

The first trigger circuit and the first delay circuit facilitate control of a timing relationship of the radar pulse and the supply pulse at the signal input and supply input of the PA.

As discussed above, a radar device implementing supply modulation needs to be calibrated for proper operation. Simulation of a radar device and/or in-lab pre-characterization of a radar device (e.g. a sample radar chip selected from a batch of chips diced from a same wafer) may provide a priori knowledge of relative propagation delays and timing relationships between trigger signals, radar pulses and supply modulation (i.e. supply pulses). These parameters influence the shape of the spectrum of a radar pulse output by a supply modulated PA. However, there may still (e.g. due to PVT variations) be variations of such parameters, both sample variations within a batch of radar devices and during use of a given radar device due to varying environmental conditions.

The first and second aspects of the present inventive concept enable calibration of the radar device "on-chip" to determine a calibrated delay setting for obtaining a target timing relationship between the radar pulse and the modulated supply voltage at the power amplifier. By setting the first delay circuit to the calibrated delay setting, the first delay circuit may compensate for varying amounts of differential propagation delay between the pulse trigger signal (e.g. along a pulse trigger path extending between the first trigger circuit and the radar pulse generator) and the supply trigger signal (e.g. along a supply trigger path extending between the first trigger circuit and the supply modulator).

The determination of the calibrated delay setting is based on the first radar pulse envelope and the first supply pulse signal. Acquiring both the first radar pulse envelope and the first supply pulse signal with the first delay circuit set to the same first delay setting may simplify processing (e.g. comparing) of the envelope and the signal to determine the calibrated delay setting. However, it is also possible to obtain the first radar pulse envelope and the first supply pulse signal using different delay settings of the first delay circuit (the first and the further different delay setting) provided this is taken into account when determining the calibrated delay setting.

In line with the background discussion, a conventional "direct" sampling approach of the radar pulses (or envelope thereof) or modulated supply voltages may not be practical, in particular in case of UWB and mmWave signals. The radar device and calibration method of the present inventive concept may considerably reduce the bandwidth requirements on a sampling circuit by using sub-sampling:
By repeatedly providing radar pulses while the delay setting of the first delay circuit is fixed and sampling an envelope signal of each radar pulse at a different instantaneous phase of the radar pulse the bandwidth requirements may be reduced considerably. That is, the envelope signal of each radar pulse is sampled at only a single sampling instant and at a different instantaneous phase thereof, and a radar pulse envelope representative of an envelope of a radar pulse provided to the signal input of the power amplifier (while using the first delay setting) may thus be iteratively obtained. That the envelope signals of the radar pulses are sampled at "a different instantaneous phase" means that each envelope sample is acquired with a different timing relative the radar pulse (or equivalently relative the radar pulse trigger). This may also be referred to as a time-diluted sampling approach. A similar approach is applied to acquire the supply pulse envelope.

As the pulse trigger signal and the supply trigger signal are generated based on a same clock signal derived from the (common) clock source, the trigger signals may be generated relative a common time basis (i.e. the clock signal). This allows the trigger signals to be generated in a phase-coherent manner, which in turn enables measurements on the radar and supply pulses to be repeated with a consistent result.

The term "radar pulse" as used herein refers to an electro-magnetic oscillating signal having a carrier frequency and an envelope with a limited temporal extension. Each pulse may include a plurality of oscillations or periods within the envelope. The term "radar wavelet" may be used as a synonym to "radar pulse".

The term "supply pulse" as used herein denotes the supply modulation (i.e. amplitude modulation) of the supply voltage provided by the supply modulator responsive to the supply trigger signal. That is, the supply modulator is configured to provide a supply voltage and, responsive to a supply trigger signal, modulate the supply voltage to provide the supply pulse to the supply input of the power amplifier.

As may be appreciated, the supply pulse may, in contrast to the radar pulse, be a baseband pulse. Hence, in practice, the term "supply pulse envelope" may in the following be used as a synonym to the term "supply pulse signal".

The supply pulse (i.e. the supply modulation) may comprise a transient change of amplitude from a base level to a peak level and back to the base level. The supply voltage may have a DC offset wherein the base level is the DC offset. The supply pulse may e.g. be a triangular or trapezoidal pulse.

In some embodiments, the first delay circuit may be arranged along a supply trigger path extending from the first trigger circuit to the supply input of the power amplifier. The first delay circuit may thus be configured to add to the supply trigger path a propagation delay which is adjustable in the plurality of first delay steps. This configuration may be practical in case the propagation delay of the radar pulse generator exceeds the propagation delay of the supply modulator.

In some embodiments, the first delay circuit may alternatively be arranged along a pulse trigger path extending from the first trigger circuit to the signal input of the power amplifier. The first delay circuit may thus be configured to add to the pulse trigger path a propagation delay which is adjustable in the plurality of first delay steps.

In some embodiments, the method may comprise estimating a step size of the first delay steps. The step size estimate may subsequently be used to determine the calibrated delay setting. This may reduce the need for tuning and characterizing the delay steps of the first delay circuit prior to performing the calibration method. It may also reduce the need for more complex delay circuit implementations including e.g. feedback loops to reduce the susceptibility to PVT variations, such as a delay locked loop.

In embodiments wherein the first delay circuit is arranged along the supply trigger path the method may further comprise:
with the first delay circuit set to a second delay setting, acquiring a second supply pulse signal (i.e. by sub-sampling);
determining a difference between a relative timing of the first supply pulse signal and a relative timing of the second supply pulse signal; and
based on the determined difference and a number of delay steps between the first and second delay setting estimating a step size of the first delay steps.

In embodiments wherein the first delay circuit is arranged along the supply trigger path the method may further comprise:
with the first delay circuit set to a second delay setting, obtaining a second radar pulse envelope (i.e. by sub-sampling);
determining a difference between a relative timing of the first radar pulse envelope and a relative timing of the second radar pulse envelope; and
based on the determined difference and a number of delay steps between the first and second delay setting estimating a step size of the first delay steps.

In each of these embodiments, the calibrated delay setting may then be determined based on the estimated step size and a difference between a relative timing of the first radar pulse envelope and a relative timing of the first supply pulse signal.

In some embodiments, the first delay circuit may be a digitally controlled delay line (DCDL). Each delay setting of the first delay circuit may thus be set responsive to a respective digital control word associated with / mapped to the respective delay setting.

In some embodiments, the sub-sampling may be performed by (i.e. the samples may be acquired by) a sampling circuit having a first sampling input and a second sampling input coupled to the signal input and the supply input of the power amplifier, respectively, and wherein the envelope signals of the radar pulses are sampled via the first sampling input and the supply pulse signals (envelope signals of the supply pulses) are sampled via the second sampling input.

Since the first and second signal inputs of the sampling circuit are coupled to the signal input and the supply input of the power amplifier, the difference in relative timings of the leading edges of the envelope signals may correspond well to a difference in time of arrival of the radar pulse and the modulated supply voltage at the signal and supply inputs, respectively.

In some embodiments, each sampling of the sub-sampling of the radar pulse envelope signals or the supply pulses may be triggered by a sampling trigger provided by a sampling trigger circuit based on a second clock signal derived from the clock source.

As the pulse trigger signal, the supply trigger signal and the sampling trigger all are generated based on (e.g. responsive to) a clock signal derived from the common clock source, the trigger signals may be generated relative a common time basis (i.e. the clock signal). This allows the trigger signals to be generated in a phase-coherent manner, which in turn enables the measurements to be repeated with a consistent result.

In some embodiments, the radar device may further comprise a second delay circuit having a plurality of delay settings such that a delay value of the second delay circuit is adjustable in a plurality of delay steps smaller than the delay steps of the first delay circuit, wherein a relative timing of the sampling trigger signal and the first clock signal is adjustable using the second delay circuit, and wherein the sub-sampling of envelope signals of the radar pulses and the sub-sampling of the supply pulses each may comprise changing the delay setting of the second delay circuit between successive radar pulses and successive supply pulses, respectively. Since the (second) delay steps of the second delay circuit are smaller than the (first) delay steps of the first delay circuit, changing the delay setting of the second delay circuit allows a timing of the sampling trigger relative the first clock signal, and thus relative the radar pulse trigger signal or the supply trigger pulse, to be adjusted between successive radar or supply pulses such that each sample is acquired at a different instantaneous phase of the radar signal pulse or supply pulse.

In some embodiments, the radar device may further comprise:
a first clock signal generator configured to receive a first oscillating clock signal and based on the first oscillating signal provide the first clock signal to the first trigger circuit, and
a second clock signal generator configured to receive a second oscillating clock signal and based on the second oscillating signal provide the second clock signal to the sampling trigger circuit, and
wherein the second delay circuit comprises a phase modulator configured to receive a reference oscillating clock signal from the clock source and, based thereon, provide a synthesized oscillating clock signal with a phase which is adjustable relative the reference oscillating signal in a plurality of phase steps (i.e. corresponding to the plurality of second delay steps).

The first oscillating signal may be the reference oscillating clock signal and the second oscillating signal may be the synthesized oscillating clock signal. Hence, the phase of the second clock signal may be varied relative the (fixed) phase of the first clock signal. Alternatively, the first oscillating signal may be the synthesized oscillating clock signal and the second oscillating signal may be the reference oscillating clock signal. Hence, the phase of the first clock signal may be varied relative the (fixed) phase of the second clock signal.

A phase modulator-based delay circuit implementation enables delay adjustments with a fine temporal resolution (i.e. small delay steps) in a large number of steps over a period of the initial oscillating signal. In a delay linebased implementation, increasing a temporal resolution while maintaining the delay range involves increasing the number of delay elements, which may tend to increase noise and timing jitter. A delay line may for this reason also be more susceptible to PVT variations than a phase modulator.

### Brief description of the drawings

The above, as well as additional objects, features and advantages, may be better understood through the following illustrative and non-limiting detailed description, with reference to the appended drawings. In the drawings like reference numerals will be used for like elements unless stated otherwise.
Figure 1 shows a radar device according to an embodiment.
Figure 2 shows a supply modulator of the radar device, according to an embodiment.
Figure 3 shows a flow chart of a calibration method according to an embodiment.

### Detailed description

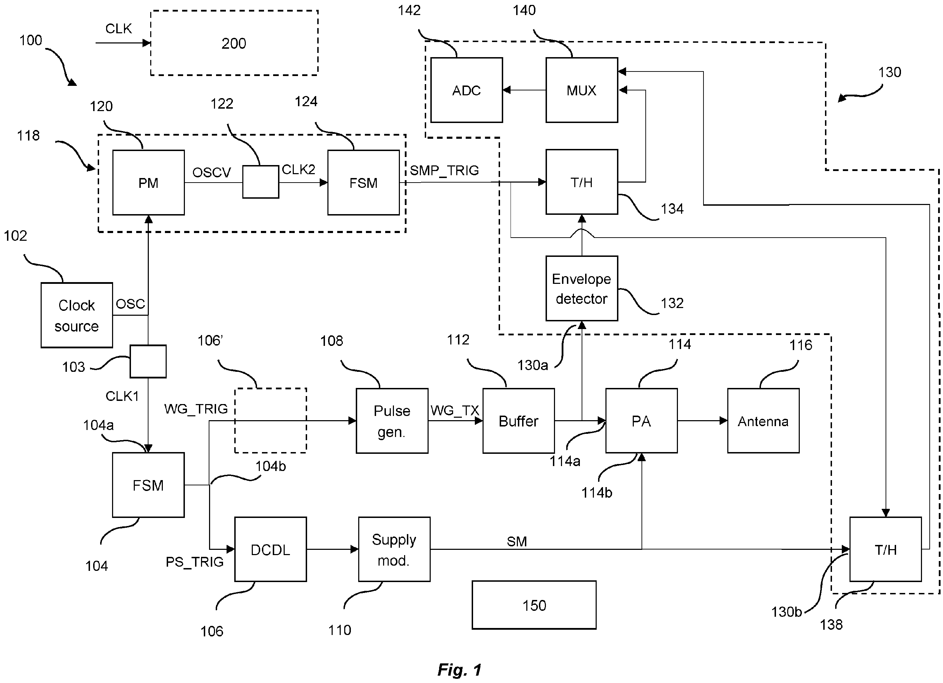

Figure 1 shows a radar device 100 according to an embodiment. The radar device 100 comprises a clock source 102, a first trigger circuit 104, a first delay circuit 106, a radar pulse generator 108, a supply modulator 110 and a power amplifier (PA) 114. The radar device 100 further comprises a second delay circuit 120, a sampling trigger circuit 124 and a sampling circuit 130.

The radar pulse generator 108 is configured to, responsive to a pulse trigger signal WG_TRIG, provide (e.g. generate and output) a radar pulse WG_TX to a signal input 114a of the PA 114. A buffer 112 may be coupled between an output of the radar pulse generator 108 and the signal input 114a of the PA 114.

The supply modulator 110 is configured to, responsive to a supply trigger signal PS_TRIG, provide (e.g. generate and output) a modulated supply voltage SM to a supply input 114b of the PA 114. The PA 114 is hence modulated by the supply voltage SM.

The output of the PA 114 may as shown be coupled to an antenna 116 for transmitting radar pulses WG_TX after amplification by the PA 114, e.g. towards a target of a radar measurement. The antenna 116 may by way of example be a dipole antenna, a Yagi antenna or a phased array antenna.

The clock source 102 is configured to provide a reference oscillating clock signal OSC, e.g. a sinusoidal signal of a fixed frequency, e.g. 1-10 GHz, such as 2.5 GHz. The clock source 102 may typically be a local oscillator of the radar device 100, e.g. a voltage-controlled oscillator (VCO) or some other conventional clock source. However, the clock source 102 may also be a clock pin configured to receive a clock signal from an external oscillator and provide the received clock signal to the further circuit blocks of the radar device 100. As will be further described below, the reference oscillating clock signal OSC (hereinafter abbreviated reference clock CLK) will be used to derive a first clock signal CLK1 which is used to clock the first trigger circuit 104, and a second clock signal CLK2 which is used to clock the sampling trigger circuit 124.

Reference sign 103 denotes a first clock generator, e.g. in the form of a limiter, configured to convert the (sinusoidal) reference clock signal OSC to a digital counterpart forming the first clock signal CLK1. The first trigger circuit 104 comprises a clock input 104a coupled to the clock source 102 via the first clock generator 103. The first trigger circuit 104 is responsive to or clocked by the first clock signal CLK1. The first trigger circuit 104 is configured to, responsive to the clock signal CLK1, provide (e.g. generate and output) a pulse trigger signal WG_TRIG to the radar pulse generator 108 and a supply trigger signal PS_TRIG to the supply modulator 110. The pulse trigger signal WG_TRIG is provided to the radar pulse generator 108 along a "pulse trigger path". The supply trigger signal PS_TRIG is provided to the supply modulator 110 along a "supply trigger path".

The pulse and supply trigger signals WG_TRIG, PS_TRIG may each be provided in the form of a digital pulse (e.g. a rectangular pulse). A duration (temporal pulse width) of the digital pulse may be pre-configured or programmable via a control input of the first trigger circuit 104.

Various implementations of the first trigger circuit 104 are possible, such as counter circuitry for counting edges of the clock signal CLK and generating the trigger signals WG_TRIG, PS_TRIG responsive to a trigger condition. The first trigger circuit 104 may as indicated in Fig. 1 be a Finite-State Machine (FSM) 104. The FSM 104 may comprise a counter circuit configured to count clock edges (e.g. leading and/or trailing) of the clock signal CLK received at the clock input 104a and in response to a configurable number of clock edges (e.g. once every N edges received) provide the pulse and supply trigger signals WG_TRIG, PS_TRIG. The FSM 104 may comprise a register for storing state variables (e.g. the number of clock edges to be received before providing WG_TRIG and PS_TRIG, pulse duration, etc.). The FSM 104 may comprise a number of control inputs for receiving control signals (e.g. digital control words) for controlling the FSM and updating the register. An FSM may as per se is known in the art be implemented using a programmable logic device.

As per the illustrated embodiment, the FSM 104 comprises a single output and provides WG_TRIG and PS_TRIG by branching (at 104b) the trigger signal from the single output into the pulse trigger path and the supply trigger path. The branching point 104b may hence according to the illustrated embodiment define the output to the pulse trigger path and the supply trigger path. It is however envisaged that the first trigger circuit 104 also may comprise respective circuit portions (e.g. a first and second counter circuit or a first and second FSM) for providing WG_TRIG and PS_TRIG at separate outputs. However, a single output implementation as shown in Fig. 1 may be advantageous by reducing the amount of circuitry needed and a risk for introducing jitter between WG_TRIG and PS_TRIG.

The first delay circuit 106 of the radar device 100 is configured to control a differential propagation delay of the pulse trigger path and the supply trigger path. The first delay circuit 106 has a plurality of delay settings such that a delay value of the first delay circuit 106 is adjustable in a plurality of first delay steps. The first delay circuit 106 is configured to adjust a difference between a first propagation delay along the pulse trigger path and a second propagation delay along the supply trigger path. The first delay circuit 106 may as shown in Fig. 1 be implemented as a digitally controlled delay line (DCDL). Various implementations of DCDLs are possible, such as a tapped delay line or a single-output delay line. While digitally-controlled delay lines may simplify the circuit implementation and delay control, analog tunable delay circuits such as a delay-locked loop (DLL) may also be used.

The first delay circuit / DCDL 106 is in the illustrated embodiment arranged along the supply trigger path. The first delay circuit 106 is accordingly configured to add to the supply trigger path a delay amount in accordance with its delay setting. This configuration may be practical in case the propagation delay of the radar pulse generator 108 exceeds the propagation delay of the supply modulator 110. E.g. the radar pulse generator 108 may need a longer time to start-up and stabilize when triggered than the supply modulator 110. The relative propagation delays of the radar pulse generator 108 and the supply modulator 110 may however vary with the specific circuit implementation. The first trigger circuit / DCDL 106 may thus alternatively be arranged along the pulse trigger path, as indicated by the dashed box 106' in Fig. 1, wherein the first delay circuit / DCDL 106' accordingly may be configured to add to the pulse trigger path a delay amount in accordance with its delay setting.

The second delay circuit 120, together with the second clock generator 122 and the sampling trigger circuit 124 may be denoted a sampling controller 118 as their combined functionality is to control the sampling operation of the sampling circuit 130.

The sampling trigger circuit 124 is clocked by a second clock signal CLK2. The sampling trigger circuit 124 is configured to, responsive to the second clock signal CLK2, provide (i.e. generate and output) a sampling trigger signal SMP_TRIG to the sampling circuit 130. The sampling trigger circuit 124 may like the first trigger circuit 104 be implemented by an FSM comprising a counter circuit configured to count clock edges (e.g. leading and/or trailing) of the second clock signal CLK2 received at the clock input and in response to a configurable number of clock edges (e.g. once every N edges received) provide the sampling trigger signal SMP_TRIG. The sampling trigger signal SMP_TRIG pulse may be provided in the form of a digital pulse (e.g. a rectangular pulse). A duration (temporal pulse width) of the digital pulse may be pre-configured or programmable via a control input of the sampling trigger circuit 124.

The second clock signal CLK2 is provided by a second clock generator 122. An input of the second clock generator 122 is coupled to an output of the second delay circuit 120 to receive a synthesized oscillating clock signal OSCV with a variable phase relative the reference clock signal OSC.

The second delay circuit 120 has, similar to the first delay circuit 106 a plurality of delay settings such that a delay value of the second delay circuit is adjustable in a plurality of second delay steps. The second delay steps are smaller than the first delay steps of the first delay circuit, and in other words of a finer resolution than the first delay steps. The second delay circuit 120 is however in contrast to the first delay circuit 106 not configured to delay a digital signal (e.g. the supply trigger pulse or the radar signal trigger pulse). Rather, the second delay circuit 120 is a phase modulator configured to receive the reference clock signal OSC from the clock source 102 and, based thereon, provide (e.g. generate and output) a synthesized oscillating clock signal OSCV with a phase which is adjustable relative the reference oscillating signal in a plurality of phase steps. The second delay circuit / phase modulator 120 thus provides the second delay steps by providing the synthesized oscillating clock signal OSCV with a variable phase. Since also the first clock signal CLK1 is derived from the oscillating reference clock signal OSC, the second delay circuit 120 hence enables a relative timing of the sampling trigger signal SMP_TRIG and the first clock signal CLK to be adjusted, so as to trigger the sampling circuit 130 to sample at a well-defined and adjustable time relative the pulse trigger signal and the supply trigger signal.

As may be appreciated, the timing of the sampling trigger signal SMP_TRIG relative (a given edge of) the first clock signal CLK1 (and thus also relative WG_TRIG and PS_TRIG) may additionally be varied in steps of a size corresponding to a spacing of clock edges of the second clock signal CLK2, which e.g. may be controlled via the above-mentioned configurable number of clock edges of the second trigger circuit 124. Accordingly, the phase-modulator of the second delay circuit 120 may provide a fine timing control while the second trigger circuit 124 may provide a coarse timing control for the sampling trigger SMP_TRIG. This further enables a timing of the sampling trigger SMP_TRIG relative the first clock signal CLK1 to be varied over a range exceeding a maximum adjustment range of the second delay circuit 120.

Various implementations of a phase modulator is per se known in the art and one non-limiting example will hence in the following only be briefly discussed by way of illustration.

Assuming the reference clock signal OSC is a differential clock signal, the input of the phase modulator 120 may comprise a component generator (e.g. a poly-phase filter) configured to, from the reference clock signal OSC, generate a pair of positive and negative in-phase component signals, and a pair of positive and negative quadrature component signals. If the clock source 102 is a quadrature oscillator, a component generator may however be omitted. The pairs of in-phase and quadrature component signals may be received by a synthesizer circuit configured to, based on the component signals, synthesize / generate a the synthesized oscillating clock signal OSCV with a phase synthesized as a weighted combination of the component signals.

The synthesizer circuit may comprise a variable gain circuit configured to receive the pairs of component signals, and output individually amplified counterparts, and a summer configured to receive the amplified component signals and generate the oscillating signal OSCV as a sum signal of the amplified component signals. For example, the variable gain circuit may comprise four gain unit cells, each configured to receive and amplify a respective one of the component signals. The summer may comprise an inductor. The phase modulator 120 may comprise a look-up-table defining a plurality of different gain combinations for amplifying the component signals, wherein the different gain combinations define the phase steps of the phase modulator 120.

Although the phase modulator 120 in the illustrated embodiment provides the synthesized oscillating clock signal OSCV to the second clock generator 122, it is equally possible to instead arrange the phase modulator 120 prior to the first clock generator 103, wherein the phase modulator 120 may be used to control a timing of (or equivalently phase) of the first clock signal CLK1 relative the second clock signal CLK2, and thereby effectively adjust a relative timing of the sampling trigger signal SMP_TRIG and the first clock signal CLK1.

In another embodiment, a delay line based implementation (e.g. a DCDL) of the second delay circuit 120 may used instead. In this case, the first and second clock generators 103, 122 of the illustrated embodiment may be replaced by a single clock generator converting the oscillating reference clock signal OSC of the clock source 102 into a first (digital) clock signal provided to the first trigger circuit 104 and a second (digital) clock signal (identical and in-phase with the first clock signal) to the second delay circuit 120. In a delay line based implementation it is also possible to reverse the order of the second delay circuit 120 and the sampling trigger circuit 124. Thus, the second delay circuit 120 may be used to delay the sampling trigger signals SMP_TRIG provided by the sampling trigger circuit 124 responsive to the second clock signal.

For an UWB mmWave radar device, a useful range for the step size of the first delay steps of the first delay circuit 104 may be on the order of 10 to 50 ps while the step size of the second delay steps may be a fraction of the first delay steps, e.g. a tenth of the first delay steps such as 1-5 ps. The term "delay step" is herein used to denote the time step or change in delay time a delay circuit can produce in the output signal. By way of example, state of the art delay circuits, such as tapped delay lines, may enable variable delay control with a resolution/step-size of about 0.5 ps or less.

While it is contemplated that the second clock signal CLK2 alternatively may be derived from a different clock source than the clock source 102, provided some mechanism for synchronizing the different clock sources is added, deriving the first and second clock signals CLK1, CLK2 from the common clock source 102 facilitates obtaining phase coherence between the sampling trigger signals SMP_TRIG and the pulse and supply trigger signals WG_TRIG, PS_TRIG.

With reference again to Fig. 1, the sampling circuit 130 has a first sampling input 130a coupled to the signal input 114a of the PA 114, and a second sampling input 130b coupled to the supply input 114b of the PA 114. The sampling circuit 130 is configured to, responsive to a sampling trigger signal SMP_TRIG, sample an envelope signal of a radar pulse WG_TX via the first sampling input 130a or a supply pulse SM via the second sampling input 130b.

The sampling circuit 130 comprises a first track-and-hold circuit T/H 134 coupled to the first sampling input 130a via an envelope detector 132. The sampling circuit 130 comprises a second track-and-hold circuit T/H 138 coupled to the second sampling input 130b. The first and second T/H 134, 138 are both configured to receive the sampling trigger signal SMP_TRIG and track a level of a respective envelope signal output by the envelope detector 132 and 136 when SMP_TRIG is low (i.e. between pulses) and hold the output level when SMP_TRIG is high (i.e. during the duration of the pulse). As may be appreciated it is also possible to use sample-and-hold circuits instead of track-and-hold circuits. As discussed above, the supply pulses SM are baseband signals and an envelope detector is hence not required at the second sampling input 130b. However, it is contemplated that the second T/H circuit 138 still in some instances may be coupled to the second sampling input 130b via a (second) envelope detector, e.g. for an increased symmetry between the first and second sampling inputs 130a, 130b.

The first and second T/H 134, 138 are coupled to an ADC 142 via a multiplexer (MUX) 140 which may responsive to a control signal selectively couple the output of either the first or second T/H 134, 138 to the ADC 142 to be converted to a digital counterpart. Alternatively, a separate ADC may be provided for the first and second T/H 134, 138 wherein the MUX 140 may be omitted.

The radar pulse generator 108 is configured to generate the radar pulses WG_TX responsive to the pulse trigger signal WG_TRIG. For an UWB mmWave radar device, the radar pulses / wavelets WG_TX may be radiofrequency pulses, e.g. UWB pulses with a pulse duration in a range of 10 ps to 50 ns and a carrier frequency in the mmWave band. The radar pulses Tx may by way of example have a bandwidth of about 7 GHz to about 14 GHz (e.g. measured at FWHM). Non-limiting examples of frequency bands within which the radar pulses Tx may include 57-71 GHz, 57-64 GHz or 77-81 GHz. While such pulses may enable high accuracy measurements in short range applications, the measurement approach disclosed herein is envisaged to have a more general applicability and thus be used in conjunction with radar pulses of higher or lower carrier frequencies and longer or shorter pulse durations.

The radar pulse generator 114 may be configured to generate each radar pulse WG_TX with a same waveform and magnitude, such that radar pulses WG_TX with generated at temporally spaced measurement occasions may present phase-coherence with respect to each other. This enables obtaining phase-coherent radar reflection data and hence facilitates the time-diluted measurement approach to be further described below

The pulse generators 114, 124 may be implemented in various manners. According to one example, the pulse generation may be realized using a transceiver module as described in connection with Fig. 4 of the published PCT-application PCT/EP2011/058847 on page 11 lines 22-30. This implementation offers a low-complexity method for generating UWB mmWave radar and reference pulses with a well-defined and fixed initial phase, carrier frequency and duration. The pulse generation may however also be realized using other oscillator configurations, for example, by a pulse generator relying on negative differential conductance (e.g. provided by a cross-coupled differential pair) or positive feedback, where it is possible to start and quench the oscillations rapidly. Further example implementations include passing a continuous oscillation through a switchable amplifier, filtering of a baseband pulse, up-conversion of a baseband pulse, or using digital gates to create the desired waveform, as per se is known to the person skilled in the art.

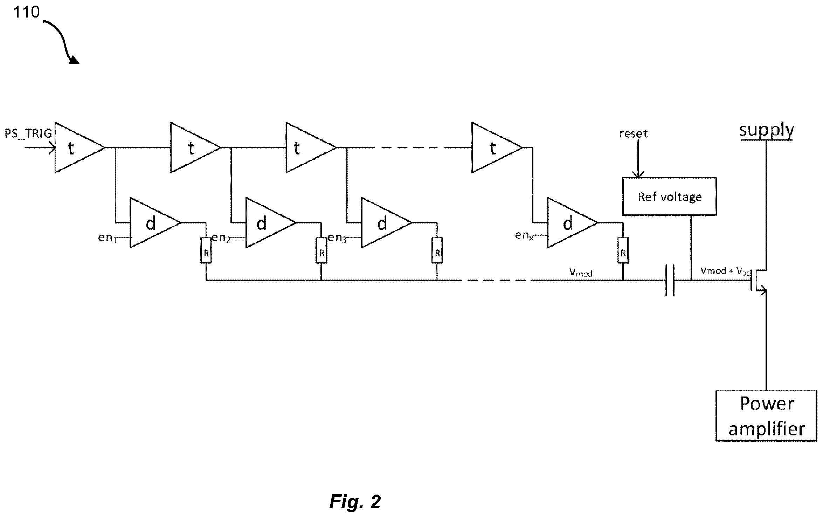

Fig. 2 illustrates an embodiment of a supply modulator 110. The modulator takes the supply pulse trigger PS_TRIG as input, which has the shape of a digital pulse. The length of the pulse may e.g. be multiples of the period of the first clock signal CLK1, or shorter, controlled using for instance an edge detect circuit.

The supply modulator 110 comprises a first set of buffers "t", connected in series. Each buffer "t" may be formed e.g. by two or more inverters. The supply modulator 110 comprises a second set of buffers "d" having an enable input for receiving a respective enable signal enᵢ. Each buffer "d" is configured to provide a high output impedance when the respective enable signal enᵢ is low.

When PS_TRIG is low the output from each "t" and "d" buffer is also low. In response, Vmod is connected solely to ground via all resistors R in series with the conducting NMOS in the output inverter of buffer "d". Node Vmod+Vdc is at a voltage set by block "Ref voltage". The Vdc voltage provided by "Ref voltage" thus tracks the threshold voltage variations of the NMOS in a source follower configuration.

When PS_TRIG toggles from low to high the rising edge propagates thru the "t" buffers. One by one the output of the "d" buffers changes from being connected to ground, via conducting NMOS, to being connected to supply, via conducting PMOS. The node Vmod changes from being connected solely to ground, via all resistors R in series with the conducting NMOS in the output inverter of buffer "d", to be partly connected to supply, via resistor R in series with the conducting PMOS in the output inverter of buffer "d", and partly connected to ground, via all resistors R in series with the conducting NMOS in the output inverter of buffer "d". Assuming the conducting NMOS and PMOS contribute with a negligible resistance the Vmod voltage becomes equal to "number of resistors connected to enabled "d" buffers"-"number of d-buffers with zero volt output"/"number of resistors connected to enabled "d" buffers". As rising edge of the supply trigger signal PS_TRIG propagates thru the modulator the "number of d-buffers with zero volt output" reduces and the Vmod increases. As the falling edge of PS_TRIG propagates the Vmod gradually decreases by the same principle.

If all resistors R have a same resistance, the supply voltage will have a triangular shape with symmetric rising and falling slopes. The slope (voltage/time) of Vmod may be digitally set by the enable signals. Other shapes than the triangular wave can be generated if the resistors are programmable.

The supply modulator 120 as shown has an advantageously low static current consumption wherein the current consumption is dominated by dynamic current consumption.

The Ref-voltage has a reset input, which e.g. may be provided by a state machine (not shown) of the radar device 100 or supply modulator 120. Once the transmitter pulse has been transmitted any residue charge at node "Vmod + Vdc" may be discharged thru the "Ref voltage" block when "reset" is logic high.

While Fig. 2 depicts an advantageous implementation of the supply modulator 110, other implementations are equally possible such as a differential pair with a controlled current source, or another suitable amplifier circuit.

Referring again to Fig. 1, the first trigger circuit / FSM 104 may responsive to a clock edge of the first clock signal CLK1 provide WG_TRIG along the pulse trigger path and PS_TRIG along the supply trigger path. WG_TRIG propagates along the pulse trigger path (possibly via the DCDL 106') to the radar pulse generator 108 which responsive to WG_TRIG generates and outputs a radar pulse WG_TX to the signal input 114a of the PA 114 (e.g. via the buffer 112) and the first sampling input 130a of the sampling circuit 130. PS_TRIG propagates along the supply trigger path (via the DCDL 106) to the supply modulator 110 which responsive to PS_TRIG generates and outputs a supply pulse SM to the supply input 114b of the PA 114 and the second sampling input 130b of the sampling circuit 130.

As may be appreciated, the amount by which the radar pulse WG_TX arriving at the signal input 114a leads or lags the supply pulse SM arriving at the supply input 114b accordingly depends on the differential propagation delays between the clock input 104a of the first trigger circuit 104 and the signal and supply inputs 114a, 114b. This applies correspondingly with respect to the first and second sampling inputs 130a, 130b of the sampling circuit 130.

Accordingly, the timing offset between the radar pulse WG_TX and the supply pulse SM is given by a difference between:
- a first total propagation delay between the clock input 104a of the first trigger circuit 104 and the signal input 114a of the PA 114, and
- a second total propagation delay between the clock input 104a of the first trigger circuit 104 and the supply input 114b of the PA 114.

More specifically, the first total propagation delay is given by the relative delay between: a triggering edge of the first clock signal CLK1 arriving at the clock input 104a of the first trigger circuit 104 (and thus triggering the first delay circuit 104 to provide a pulse trigger signal WG_TRIG), and a leading edge of the radar pulse WG_TX (generated responsive to the pulse trigger signal WG_TRIG) arriving at the signal input 114a of the PA 114. The second total propagation delay is correspondingly given by the relative delay between: a triggering edge of the first clock signal CLK1 arriving at the clock input 104a of the first trigger circuit 104 (and thus triggering the first delay circuit 104 to provide a supply trigger signal PS_TRIG), and a leading edge of the supply pulse SM (generated responsive to the supply trigger signal PS_TRIG) arriving at the supply input 114b of the PA 114. By varying a delay setting of the first delay circuit 106 (or 106') the difference between the first and second total propagation delays may be adjusted.

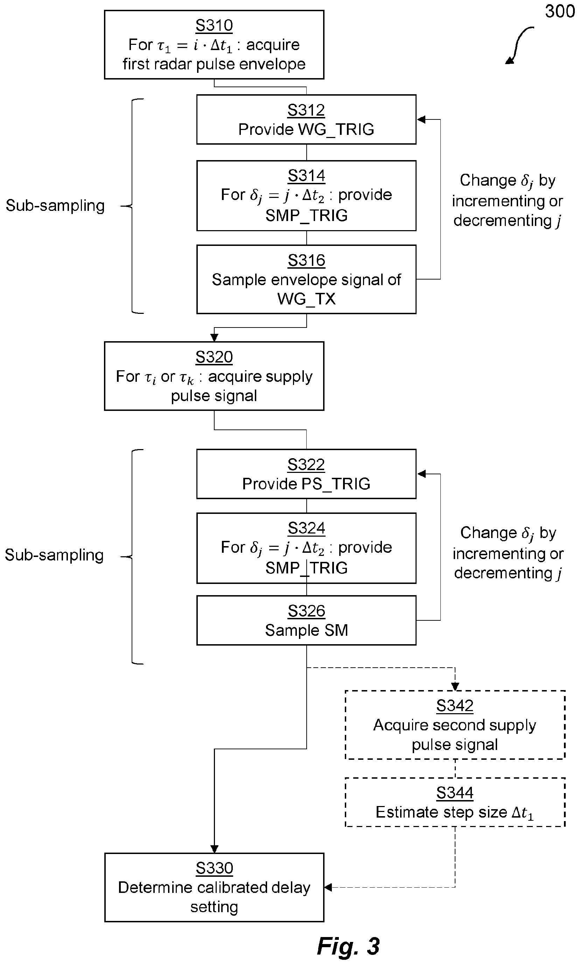

A calibration method 300 for determining a calibrated delay setting of the first delay circuit 104 will now be described with reference to Figs. 1 and 3. The calibration method comprises acquiring envelopes of radar and supply pulses by a sub-sampling approach.

The method 300 comprises setting the first delay circuit 104 to an initial or first delay setting *τᵢ* = *i* ∗ Δ*t*₁ and then acquiring a first radar pulse envelope while *τᵢ* remains fixed (step S310). The parameter *i* denotes the number of delay steps of step size Δ*t*₁ to be used by the first delay circuit 104. The radar pulse envelope is acquired using sub-sampling, by repeatedly:
- providing a pulse trigger signal WG_TRIG by the first trigger circuit 104 to trigger the radar pulse generator 108 to provide a radar pulse WG_TX (step S312) to the PA signal input 114a, and
- with the second delay circuit 120 set to *δⱼ* = *j* ∗ Δ*t*₂, providing a sampling trigger signal SMP_TRIG by the sampling trigger circuit 124 to the sampling circuit 130 (step S314) to trigger the sampling circuit 130 (e.g. T/H 134 and ADC 142) to hold and acquire a sample of the envelope signal of the radar pulse WG_TX output by the envelope detector 132 (S316),
and repeating steps S312-316 after changing *δⱼ* by incrementing or decrementing *j*. The parameter *j* denotes the number of delay steps of step size Δ*t*₂ (e.g. or corresponding phase steps Δφ₂) to be used by the second delay circuit / PM 120. By varying the step parameter *j* between a minimum and maximum value, radar pulse envelope samples may thus be iteratively acquired at different instantaneous phases of the radar pulse WG_TX. In other words, a timing of the sampling trigger signal SMP_TRIG relative the first clock signal CLK1 may be varied between successive repetitions such that each envelope sample is acquired with a different timing relative the pulse trigger signal WG_TRIG.

The method further comprises, with the first delay circuit 104 (still) set to the first delay setting *τᵢ* = *i* ∗ Δ*t*₁, or after setting the first delay circuit 104 to a different delay setting e.g. *τ_{k≠i}* = *k* ∗ Δ*t*₁, acquiring a first supply pulse signal (envelope) while *τ*_{*i*/*k*} remains fixed (step S320). The supply pulse signal is like the radar pulse envelope acquired using sub-sampling, by repeatedly:
- providing a supply trigger signal PS_TRIG by the first trigger circuit 104 to trigger the supply modulator 110 to provide a supply pulse SM (step S322) to the PA supply input 114b, and
- with the second delay circuit 120 set to *δⱼ* = *j* ∗ Δ*t*₂, providing a sampling trigger signal SMP_TRIG by the sampling trigger circuit 124 to the sampling circuit 130 (step S324) to trigger the sampling circuit 130 (e.g. T/H 138 and ADC 142) to hold and acquire a sample the radar pulse SM (S326),
and repeating steps S322-326 after changing *δⱼ* by incrementing or decrementing *j*. By varying the step parameter *j* between a minimum and maximum value, supply pulse signal samples may thus be iteratively acquired at different instantaneous phases of the supply pulse SM. In other words, a timing of the sampling trigger signal SMP_TRIG relative the first clock signal CLK1 may be varied between successive repetitions such that each sample is acquired with a different timing relative the supply trigger signal PS_TRIG.

While Fig. 1 shows that the radar pulse envelope is acquired first and then the supply pulse signal, the opposite order is equally possible. Additionally, the sequential acquisition depicted in Fig. 3 is due to the radar device 100 comprising a single ADC 142 and MUX 140, wherein the MUX 140 while acquiring the radar pulse envelope is configured to couple the output of T/H 134 to the ADC 142 and while acquiring the supply pulse signal is configured to couple the output of T/H 138 to the ADC 142. It is however envisaged that, since the first trigger circuit 104 may provide WG_TRIG and PS_TRIG simultaneously, the radar pulse envelope and the supply pulse signal may be acquired in parallel using two independent ADCs (wherein the MUX 140 may be omitted).

The method 300 further comprises determining, based on the acquired radar pulse envelope and supply pulse signal, a calibrated delay setting *τ_{cal}* of the first delay circuit 104. The calibrated delay setting *τ_{cal}* is a delay setting such that, when the first delay circuit 104 is set thereto, a target timing relationship is obtained between the radar pulse WG_TX and the supply pulse SM.

Step S330 of determining the calibrated delay setting *τ_{cal}* may comprise determining a relative timing of the first radar pulse envelope and a relative timing of the first supply pulse signal, wherein the calibrated delay setting *τ_{cal}* may be determined based on the determined relative timings. Due to the common time basis defined by the first clock signal CLK1, the relative timings may be compared so that the delay setting of the first delay circuit 140 providing the desired adjustment of the differential propagation delays along the pulse trigger path and the supply trigger path may be determined.

The relative timings may e.g. be determined relative a timing of the first clock signal CLK1, the second clock signal CLK2, or the sampling trigger SMP_TRIG of the sub-sampling loop with the greatest lead relative WG_TRIG and PS_TRIG. The relative timings of the respective envelopes may e.g. be the relative timings of respective leading or trailing edges of the first radar pulse envelope and the first supply voltage signal.

The calibrated delay setting *τ_{cal}*, including the determining of the relative timing of the radar pulse envelope and supply pulse signal, the comparison, etc., may be performed by signal processing circuitry of the radar device 100, e.g. comprised in the radar controller 150 further discussed below.

The target timing relationship provided by the calibrated delay setting *τ_{cal}* may be such that the radar pulse and the supply pulse are present simultaneously at the PA signal input 114a and PA supply input 114b, respectively.

In some embodiments, the target timing relationship may be that the radar pulse WG_TX provided to the signal input 114a leads or lags the supply pulse SM provided to the supply input 114b by an amount which is within a predetermined tolerance from a target timing difference. The target timing relationship may accordingly be determined to achieve a desired timing difference between the radar pulse WG_TX and the supply pulse SM at the inputs 114a, 114b of the PA 114.

The predetermined tolerance may correspond to or be equal to a step size Δ*t*₁ of the first delay steps of the first delay circuit 104. The timing relationship may hence be set as closely to the target timing difference as allowed by the resolution of the delay adjustment allowed by the first delay circuit 104.

The target timing difference may be a zero difference. The target timing relationship may accordingly be that the lead or lag of the radar pulse WG_TX relative the supply pulse SM is within the predetermined tolerance.

The target timing difference may alternatively be a non-zero timing difference. The target timing relationship may accordingly be that the lead or lag of the radar pulse WG_TX relative the supply pulse SM is within the predetermined tolerance of the target timing difference.

A non-zero timing difference may for example be determined a priori by measuring a spectrum of an output of the PA 114 using an off-line spectrum analyzer for a range of different timing differences (e.g. different delay settings of the first delay circuit 104), and determining the non-zero timing difference as the timing difference within the range yielding a desired spectrum (e.g. facilitating measurements with a desired accuracy and complying with regulatory spectrum allocations).

A non-zero timing difference may advantageously be used in embodiments wherein the radar pulse generator 108 is configured to provide a radar pulse WG_TX with a first temporal pulse width (first duration) and the supply modulator 110 is configured to provide a supply pulse SM with a second temporal pulse width (second duration) smaller than the first temporal pulse width. The target timing relationship may in this case be that the radar pulse WG_TX provided to the PA signal input 114a leads the supply pulse SM provided to the PA supply input 114b by an amount which is within a predetermined tolerance from the target timing difference.

The supply pulse SM (with the shorter duration) may thus arrive at the PA supply input 114b with a delay relative the radar pulse WG_TX (with the longer duration) arriving at the PA signal input 114a and hence be used to quench and thus shape the leading and trailing edges of the radar pulse WG_TX. This allows sidelobes (which may be caused by the fast transients in the leading or trailing edges of the radar pulses WG_TX) to be suppressed in the amplified radar pulses output by the PA 114.

In the event the step size Δ*t*₁ of the first delay circuit 104 is not a priori known, the method 300 may comprise further steps S342-344 for estimating Δ*t*₁ prior to determining the calibrated delay setting *τ_{cal}*.

In step S342, a second supply pulse signal is acquired using a second delay setting *τ_{l≠i}* = *l* ∗ Δ*t*₁ of the first delay circuit 104, differing by a number of steps Δ*ₛₜₑₚₛ* = |*l* - *i*| from the first delay setting *τᵢ* (step S342). Also the second radar pulse envelope may be acquired using sub-sampling.

After determining a difference Δ*_{T}* between a relative timing of the first supply pulse signal and a relative timing of the second supply pulse signal the step size Δ*t*₁ may be estimated as Δ*t*₁ = Δ*_{T}*/Δ*ₛₜₑₚₛ.*

The step size estimate Δ*t*₁ may subsequently be used to in step S330 determine the calibrated delay setting *τ_{cal}.* This may reduce the need for tuning and characterizing the first delay circuit 104 prior to performing the calibration method.

Since the first delay circuit 106 of the radar device 100 is arranged along the supply trigger path, the above steps S342-344 refer to first and second supply pulse envelopes. However, if the radar device 100 comprises the first delay circuit 106' arranged along the radar pulse trigger path steps S342-S344 may be applied correspondingly however with reference to first and second radar pulse envelopes.

While the calibration method 300 enables a calibration of the supply modulation with a minimum number of measurements, other approaches are also possible.

In some embodiments, the calibration method may comprise, for each of a plurality of different delay settings *τ*_{*i*=1,2,...} of the first delay circuit 104, obtaining a respective radar pulse envelope and a respective supply pulse signal (i.e. by sub-sampling, i.e. iteratively obtaining the respective samples while varying *δⱼ* of the second delay circuit 120).

In other words, steps S310 (with sub-steps S312-316) and S320 (with sub-steps 322-326) may in other words be repeated for a plurality of different delay settings *τ*_{*i*=1,2,...}. The calibrated delay setting *τ_{cal}* may then be determined based on the radar pulse envelopes and supply pulse signals acquired for the plurality of different delay settings. The calibrated delay setting may for instance be the delay setting *τ*_{*i*=1,2,...} among the plurality of different delay settings of the first delay circuit 104 which, when the first delay circuit 104 is set thereto, results in a lead or lag of the radar pulse WG_TX relative the supply pulse SM closest to a (zero or non-zero) target timing difference (discussed above).

The control signals needed to cause the radar device 100 to perform the calibration methods described above, as well as the various control signals and state variables discussed in connection with Figs. 1-3 (e.g. for the first trigger circuit / FSM 104, the second trigger circuit 118, the first delay circuit 106, the pulse generator 108, the supply modulator 110, the MUX 140 and the ADC 142) may be provided by a radar controller 150 of the radar device 100. The radar controller 150 may e.g. be implemented in dedicated circuitry, an ASIC or an FPGA. A main controller may alternatively be implemented by a dedicated microcontroller, or by a microprocessor in combination with a computer readable medium, such as a non-volatile memory, storing instructions for causing the microprocessor to provide the control signals etc. to the radar device 100.

The illustrated portion of the radar device 100 may in particular form part of a transmitter of the radar device 100. As may be appreciated, the radar device 100 may accordingly further comprise a receiver (schematically indicated by the dashed box 200 in Fig. 1) for receiving radar pulses reflected from a radar target. The radar pulses may e.g. be received via a dedicated receiver antenna. Various implementations of a radar receiver for a pulsed radar device is per se known in the art and one non-limiting example will hence in the following only be briefly discussed by way of illustration.

The receiver 200 may comprise a reference pulse generator configured to generate reference pulses (WG_Ref) to be correlated with received radar pulses (e.g. UWB mmWave pulses). The correlation may be implemented by a correlator circuit, comprising e.g. a mixer for mixing the received radar pulses with reference pulses, and an integrator (e.g. a capacitor or an integrating OP-amp) converting the AC output of the mixer to a DC signal. The DC signal may subsequently be converted to a digital value by an ADC and stored for further processing. The reference pulse generator may be implemented in a same manner as the radar pulse generator 108. Reference pulses generated at temporally spaced measurement occasions may thus present mutual phase-coherence. By generating the radar pulses WG and the reference pulses with a same waveform, the receiver may implement matched filter detection of received radar pulses during operation.

The receiver may comprise a trigger circuit with a function corresponding to the first trigger circuit but configured to provide a reference pulse trigger signal (REF_TRIG) to the reference pulse generator for triggering the reference pulse generator to provide a reference pulse to the mixer. The trigger circuit of the receiver may be clocked by a same clock signal as the transmitter (e.g. clock signal CLK). Using suitable delay circuitry (e.g. a combination of one or more delay line(s) and clock edge counters) a relative timing of the pulse trigger signal WG_TRIG and the reference trigger pulse REF_TRIG and thus a radar pulse for transmission and a reference pulse for mixing may be generated with a variable delay Δ*τ_{WG_TRIG-REF_TRIG}.*

The relative timing / timing offset between a received radar pulse and a corresponding reference pulse at the mixer is accordingly a function of the round-trip delay (RTD) of the radar pulse and the delay Δ*τ_{WG_TRIG-REF_TRIG}.* As may be appreciated, the RTD depends on the distance to the radar target. Under the constraint that the RTD does not change, an instantaneous phase relationship between a received radar pulse Rx and a reference pulse Ref during mixing, and hence the instantaneous mixing product at the mixer, may accordingly be varied deterministically between successive radar measurements by varying the delay Δ*T_{WG_TRIG-REF_TRIG}.* The integrated mixing product or the digital counterpart generated by the ADC of each radar measurement thus corresponds to a sample of a cross-correlation between the received radar pulse and the reference pulse WG_Ref.

The radar device 100 may thus during use, in a similar manner as the sampling circuit 130 during supply modulation calibration, obtain a sampled received radar pulse using a sub-sampling or time-diluted sampling approach: i.e. comprising repeatedly transmitting and receiving radar pulses, and correlating (i.e. mixing and integrating) each received pulse with a reference pulse WG_REF generated with delay Δ*τ_{WG_TRIG-REF_TRIG}* which is varied between the measurement. In particular, the radar device 100 may during measurement set the first delay circuit 104 to the calibrated delay setting for proper operation of the supply modulation.

As may be appreciated, the radar device 100 may be used for various of applications and for different types of radar target. For example, in a gesture detection application the radar target may be a hand or a finger of a user locate in relative proximity to an electronic device (e.g. a tablet computer, a laptop computer, a media player, a smart watch, headphones or some other electronic device implementing a radar-based contactless user interaction). In an autonomous robot application (e.g. a cleaning robot, a lawn mower robot, a drone), the radar target may be a structure such as a wall or some obstacle whose presence and/or position may be relevant for a movement decision by the autonomous robot. In a surface scanning application the radar target may be a surface of interest (e.g. a surface traversed by a robot). These examples of applications and radar targets are however merely non-limiting examples and many other types of applications and radar targets are possible.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method for calibrating a radar device, the radar device comprising:
a power amplifier comprising a signal input and a supply input,
a radar pulse generator configured to, responsive to a pulse trigger signal, provide a radar pulse to the signal input of the power amplifier,
a supply modulator configured to, responsive to a supply trigger signal, provide a supply pulse to the supply input of the power amplifier,
a first trigger circuit configured to, based on a first clock signal derived from a clock source, provide the pulse trigger signal to the radar pulse generator, and the supply trigger signal to the supply modulator, and
a first delay circuit having a plurality of delay settings such that a delay value of the first delay circuit is adjustable in a plurality of delay steps, wherein a relative timing of the pulse trigger signal and the supply trigger signal is adjustable using the first delay circuit;
the method comprising:
with a first delay setting of the first delay circuit, acquiring a first radar pulse envelope by: repeatedly providing a pulse trigger signal to trigger the radar pulse generator to provide a plurality of radar pulses, and sub-sampling an envelope signal of the radar pulses such that the envelope signal of each radar pulse is sampled once at a different instantaneous phase; and
with the first or a different delay setting of the first delay circuit, acquiring a first supply pulse signal by: repeatedly providing a supply trigger signal to trigger the supply modulator to provide a plurality of supply pulses, and sub-sampling the supply pulses such that each supply pulse is sampled once at a different instantaneous phase; and
determining, based on the acquired first radar pulse envelope and the first supply pulse signal, a calibrated delay setting of the first delay circuit providing a target timing relationship between a radar pulse and a supply pulse when the first delay circuit is set to the calibrated delay setting.

2. A method according to claim 1, further comprising determining a relative timing of the first radar pulse envelope and a relative timing of the first supply pulse signal, wherein the calibrated delay setting is determined based on the determined relative timings.

3. A method according to claim 2, wherein the relative timing is determined as a relative timing of respective leading edges of the first radar pulse envelope and the first supply pulse signal.

4. A method according to any one of the preceding claims, wherein the first delay circuit is arranged along a supply trigger path extending from the first trigger circuit to the supply input of the power amplifier, or along a pulse trigger path extending from the first trigger circuit to the signal input of the power amplifier.

5. A method according to claim 4, further comprising:
with a second delay setting of the first delay circuit, acquiring a second supply pulse signal or a second radar pulse envelope;
determining a difference between a relative timing of the first supply pulse signal and a relative timing of the second supply pulse signal, or between a relative timing of the first radar pulse envelope and a relative timing of the second radar pulse envelope; and
based on the determined difference and a number of delay steps between the first and second delay setting estimating a step size of the first delay steps;
wherein the calibrated delay setting is determined based on the estimated step size and a difference between a relative timing of the first radar pulse envelope and a relative timing of the first supply pulse signal.

6. A method according to any one of the preceding claims, wherein the method comprises, for each of a plurality of different delay settings of the first delay circuit, acquiring a respective radar pulse envelope and a respective supply pulse signal, wherein the calibrated delay setting is determined based on the radar pulse envelopes and supply pulse signals acquired for the plurality of different delay settings.

7. A method according to any one of the preceding claims, wherein the first delay circuit is a digitally controlled delay line.

8. A method according to any one of the preceding claims, wherein the sub-sampling is performed by a sampling circuit having a first sampling input and a second sampling input coupled to the signal input and the supply input of the power amplifier, respectively, and wherein the envelope signals of the radar pulses are sampled via the first sampling input and the supply pulses are sampled via the second sampling input.

9. A method according to any one of the preceding claims, wherein each sampling of the sub-sampling of the envelope signals of the radar pulses or the supply pulses is triggered by a sampling trigger provided by a sampling trigger circuit based on a second clock signal derived from the clock source.

10. A method according to claim 9, wherein the radar device further comprises a second delay circuit having a plurality of delay settings such that a delay value of the second delay circuit is adjustable in a plurality of delay steps smaller than the delay steps of the first delay circuit, wherein a relative timing of the sampling trigger signal and the first clock signal is adjustable using the second delay circuit, and wherein the sub-sampling of envelope signals of the radar pulses and the sub-sampling of the supply pulses each comprises changing the delay setting of the second delay circuit between successive radar pulses and successive supply pulses, respectively.

11. A method according to claim 10, wherein the radar device further comprises:
a first clock signal generator configured to receive a first oscillating clock signal and based on the first oscillating signal provide the first clock signal to the first trigger circuit, and
a second clock signal generator configured to receive a second oscillating clock signal and based on the second oscillating signal provide the second clock signal to the sampling trigger circuit, and
wherein the second delay circuit comprises a phase modulator configured to receive a reference oscillating clock signal from the clock source and, based thereon, provide a synthesized oscillating clock signal with a phase which is adjustable relative the reference oscillating signal in a plurality of phase steps, and
wherein the first oscillating signal is the reference oscillating clock signal and the second oscillating signal is the synthesized oscillating clock signal, or
wherein the first oscillating signal is the synthesized oscillating clock signal and the second oscillating signal is the reference clock signal.

12. A method according to any one of the preceding claims, wherein the target timing relationship is that the radar pulse provided to the signal input of the power amplifier leads or lags the supply pulse provided to the supply input of the power amplifier by an amount which is within a predetermined tolerance from a target timing difference.

13. A method according to claim 10, wherein the predetermined tolerance corresponds to a step size of the delay steps of the first delay circuit.

14. A method according to any one of claims 12-13, wherein the target timing difference is a zero difference.

15. A radar device comprising:
a power amplifier comprising a signal input and a supply input,
a radar pulse generator configured to, responsive to a pulse trigger signal, provide a radar pulse to the signal input of the power amplifier,
a supply modulator configured to, responsive to a supply trigger signal, provide a supply pulse to the supply input of the power amplifier,
a clock source;
a first trigger circuit configured to, based on a first clock signal derived from the clock source, provide the pulse trigger signal to the radar pulse generator, and the supply trigger signal to the supply modulator;
a first delay circuit having a plurality of delay settings such that a delay value of the first delay circuit is adjustable in a plurality of delay steps, wherein the radar device is configured to adjust a relative timing of the pulse trigger signal and the supply trigger signal using the first delay circuit; and
a calibration controller configured to cause the radar device to perform a method for calibrating the radar device according to any one of the preceding claims.
